# EUROPEAN PATENT APPLICATION

(11) **EP 3 617 484 A1**
(43) Date of publication of application: **04.03.2020**
(21) Application number: 18809732.3
(22) Date of filing: 29.05.2018
(51) Int. Cl.: F02D 19/08, F02D 41/02, F02D 45/00, F02M 37/00, F02M 51/00, F02M 61/10, F02M 63/00

(54) **COMPRESSION-IGNITION ENGINE AND CONTROL METHOD FOR COMPRESSION IGNITION ENGINE**

(30) Priority: 31.05.2017 JP 2017108739
(71) Applicant: Mazda Motor Corporation, Aki-gun Hiroshima 730-8670 (JP)
(72) Inventor: HITOMI, Mitsuo, Aki-gun Hiroshima 730-8670 (JP); YAMAMOTO, Hiroyuki, Aki-gun Hiroshima 730-8670 (JP); YAMAMOTO, Toshihide, Aki-gun Hiroshima 730-8670 (JP); FUJIMOTO, Hidefumi, Aki-gun Hiroshima 730-8670 (JP)
(74) Representative: Müller-Boré & Partner Patentanwälte PartG mbB
(86) International application number: PCT/JP2018/020588
(87) International publication number: WO 2018/221525

(57) **Abstract**

A compression ignition engine includes an engine body (diesel engine 1), a first fuel supply (naphtha injector 19) for supplying a first fuel, a second fuel supply (diesel fuel injector 18) for supplying a second fuel, and a controller (PCM 10) for outputting a signal to each of the first and second fuel supplies. The second fuel less easily vaporizes than the first fuel, and has a pressure and temperature at which compression ignition is initiated and at least one of which is lower than that of the first fuel. The controller outputs a signal to the first fuel supply such that a weight of the supplied first fuel is larger than that of the supplied second fuel, and thereafter, outputs a signal to the second fuel supply such that the second fuel is supplied to a combustion chamber. A formed air-fuel mixture is compressed and ignited.

## Description

### TECHNICAL FIELD

The present disclosure relates to a compression ignition engine and a method for controlling a compression ignition engine.

### BACKGROUND ART

Patent Document 1 describes a diesel engine. This diesel engine is provided with an exhaust gas purification system using a three-way catalyst for the purpose of omitting a high-cost selective reduction catalyst system. In order to purify an exhaust gas using the three-way catalyst, in the diesel engine, a size of each of injection holes through which diesel fuel is injected into a combustion chamber and an injection pressure are adjusted. This allows the diesel fuel to be diffused throughout the combustion chamber to form an air-fuel mixture at a stoichiometric air-fuel ratio, and the air-fuel mixture to be combusted by compression ignition.

Patent Document 2 describes a diesel engine in which gasoline as a secondary fuel is introduced into an intake passage through a carburetor and diesel fuel is injected into a combustion chamber. Patent Document 2 shows that, as a ratio of the diesel fuel and the gasoline, a rate of the diesel fuel to a total fuel amount is set to 50% or more.

Patent Document 3 describes a diesel engine in which vaporized naphtha is supplied into a combustion chamber through an intake passage and liquid naphtha is injected into the combustion chamber. Patent Document 3 shows that an amount of naphtha supplied to the combustion chamber through the intake passage is set not to exceed 50% of the total fuel amount.

### CITATION LIST

### PATENT DOCUMENT

Patent Document 1: Japanese Patent No. 5620715
Patent Document 2: United Kingdom Patent No. 714672
Patent Document 3: United Kingdom Patent No. 821725

### SUMMARY OF THE INVENTION

### TECHNICAL PROBLEM

In the diesel engine described in Patent Document 1, the air-fuel mixture at the stoichiometric air-fuel ratio is formed and combusted by diffusing the diesel fuel throughout the combustion chamber. However, since the diesel fuel hardly vaporizes, the diesel engine described in Patent Document 1 has a problem of generating, in the combustion chamber, a portion where the concentration of the fuel is locally increased. When the concentration of fuel is locally increased, soot and a carbon monoxide (CO) are generated in the combustion chamber.

In view of the foregoing background, it is therefore an object of the present disclosure to provide a compression ignition engine capable of reducing the generation of soot and CO.

### SOLUTION TO THE PROBLEM

Specifically, the present disclosure relates to a compression ignition engine. The compression ignition engine includes: an engine body having a combustion chamber; a first fuel supply configured to supply a first fuel to the combustion chamber; a second fuel supply configured to supply a second fuel to the combustion chamber, the second fuel less easily vaporizing than the first fuel, and having a pressure and temperature at which compression ignition is initiated and at least one of which is lower than that of the first fuel; and a controller configured to output a signal to each of the first fuel supply and the second fuel supply. The controller outputs a signal to the first fuel supply such that a weight of the first fuel supplied to the combustion chamber is larger than a weight of the second fuel supplied to the combustion chamber, and thereafter, outputs a signal to the second fuel supply such that the second fuel is supplied to the combustion chamber. The controller outputs a signal to each of the first fuel supply and the second fuel supply, thereby allowing formation of an air-fuel mixture inside the combustion chamber and compressing and igniting the air-fuel mixture.

In this configuration, the compression ignition engine includes the first fuel supply and the second fuel supply. Two types of fuel, namely, the first fuel and the second fuel are supplied to the combustion chamber. At least one of the pressure or temperature of the first fuel, at which the compression ignition is initiated, is higher than that of the second fuel, and the first fuel more easily vaporizes than the second fuel. At least one of the pressure or temperature of the second fuel, at which the compression ignition is initiated, is lower than that of the first fuel, and the second fuel less easily vaporizes than the first fuel.

The weight of the first fuel supplied to the combustion chamber is larger than the weight of the second fuel supplied to the combustion chamber. The first fuel which easily vaporizes mainly contributes to the generation of torque of the compression ignition engine. The second fuel which is easily compressed and ignited mainly contributes to the ignition of the air-fuel mixture.

The first fuel supply receives the signal from the controller and thereby supplies the first fuel to the combustion chamber at relatively early timing. Since when the supplying timing is made early, a period of time from when the first fuel is supplied to the combustion chamber up to when the air-fuel mixture is ignited and combusted becomes long, the first fuel which easily vaporizes form a homogeneous air-fuel mixture. This can substantially prevent generation of the soot and CO upon the combustion. Emission performance of the compression ignition engine is enhanced.

The second fuel supply receives the signal from the controller and thereby supplies the second fuel to the combustion chamber at relatively late timing. The second fuel is used to ignite the air-fuel mixture, the timing at which the second fuel is supplied is adjusted, thereby making it possible to adjust the timing at which the air-fuel mixture is compressed and ignited and the timing at which the air-fuel mixture is combusted. The timing at which the second fuel is supplied to the combustion chamber is adjusted such that the air-fuel mixture is compressed and ignited at appropriate timing, thereby enhancing a thermal efficiency of the compression ignition engine.

Therefore, the compression ignition engine having the above-described configuration can substantially prevent the generation of the soot and CO, and can enhance torque and enhance fuel consumption economy performance.

The first fuel may have a boiling point lower than that of the second fuel.

Thus, since the first fuel vaporizes under a condition that a pressure and a temperature in the combustion chamber are low, the fuel can be supplied, starting from the intake stroke in which the pressure in the combustion chamber is low. Because the fuel can be supplied at the early timing and the vaporization performance is high, even if the amount of the first fuel supplied thereto is increased, the homogeneous air-fuel mixture can be formed. Thus, the generation of the soot and CO can be reduced, and the torque can be enhanced and the fuel economy performance can be enhanced.

The controller may output signal to each of the first fuel supply and the second fuel supply such that the weight of the second fuel supplied to the combustion chamber accounts for 10% or less of a total weight of whole fuel supplied to the combustion chamber.

Thus, the second fuel can be used for compressing and igniting the air-fuel mixture, and by adjusting the timing at which the second fuel is supplied, the timing of the compression ignition and combustion can be adjusted.

The first fuel may include naphtha, and the second fuel may include diesel fuel. Naphtha easily vaporizes, as compared with the diesel fuel. This helps form the homogeneous air-fuel mixture inside the combustion chamber. Since the diesel fuel easily ignites, as compared with naphtha, the air-fuel mixture can be compressed and ignited at an appropriate timing. In addition, since naphtha is relatively inexpensive, the use of naphtha is cost-effective.

The first fuel may include gasoline, and the second fuel may include diesel fuel. As mentioned above, the homogeneous air-fuel mixture can be formed in the combustion chamber, and the air-fuel mixture can be compressed and ignited at an appropriate timing.

The controller may output a signal to each of the first fuel supply and the second fuel supply such that the first fuel and the second fuel are supplied to, and combusted in, the combustion chamber and an air-fuel ratio of exhaust gas discharged from the combustion chamber falls within a range of 14.5 to 15.0.

The controller may output a signal to each of the first fuel supply and the second fuel supply such that the first fuel and the second fuel are supplied to the combustion chamber and an air-fuel ratio of an air-fuel mixture inside the combustion chamber falls within a range of 14.5 to 15.0.

The air-fuel ratio of the air-fuel mixture in the combustion chamber is a ratio between a total weight of the fuel supplied to the combustion chamber and a weight of air filled in the combustion chamber.

Thus, it is made possible to set the air-fuel ratio of the exhaust gas to be in the range of 14.5 to 15.0. In addition, by setting the air-fuel ratio of the air-fuel mixture to substantially the stoichiometric air-fuel ratio, the torque is increased as compared with the conventional diesel engine operated in a state in which the air-fuel ratio of the air-fuel mixture is more fuel-lean than the stoichiometric air-fuel ratio.

A three-way catalyst may be disposed in an exhaust passage of the engine body to purify exhaust gas discharged from the combustion chamber, and the controller may output a signal to each of the first fuel supply and the second fuel supply such that the first fuel and the second fuel are supplied to, and combusted in, the combustion chamber and an air-fuel ratio of the exhaust gas at a position upstream of the three-way catalyst in the exhaust passage is equal to a stoichiometric air-fuel ratio.

By setting the air-fuel ratio of the exhaust gas to the stoichiometric air-fuel ratio, CO, HC, and NOₓ of the exhaust gas can be purified. Emission performance of the compression ignition engine is further enhanced. The air-fuel ratio that is in the range of 14.5 to 15.0 corresponds to a purification window of the three-way catalyst. By setting the air-fuel ratio to the stoichiometric air-fuel ratio, the purification by the three-way catalyst is made further reliable.

In the conventional diesel engine, it is required to increase a supercharging capacity and make an air-fuel ratio upon the combustion lean, thereby reducing NOₓ. However, in the present configuration, by supplying the first fuel, the air-fuel ratio of the exhaust gas can be set to the stoichiometric air-fuel ratio, and by the combination with the three-way catalyst, without relying on the supercharging unlike the conventional diesel engine, the soot and CO can be reduced, and NOₓ can be reduced. Thus, it is also made possible to provide an inexpensive engine which is not equipped with a supercharger.

The first fuel supply may be disposed in a position where the first fuel is injected into an intake port of the engine body, and the second fuel supply may be disposed in a position where the second fuel is injected into the combustion chamber.

When the first fuel is injected into the intake port, the first fuel is diffused inside the combustion chamber by an intake air flow, thereby allowing formation of a homogeneous air-fuel mixture. This helps reduce the generation of the soot and CO.

Since the second fuel supply unit injects the second fuel into the combustion chamber, the second fuel can be supplied to the combustion chamber at an appropriate timing before the compression top dead center. The air-fuel mixture is compressed and ignited at an appropriate timing.

The controller may output a signal to the first fuel supply such that the first fuel is supplied to the combustion chamber during an intake stroke, and may output a signal to the second fuel supply such that the second fuel is supplied to the combustion chamber during a compression stroke after the intake stroke.

The controller may output the controller outputs a signal to the first fuel supply such that the first fuel is injected into the intake port during the intake stroke, and may output a signal to the second fuel supply such that the second fuel is injected into the combustion chamber during the compression stroke after the intake stroke.

A method for controlling a compression ignition engine disclosed herein includes: allowing a controller to output a signal to a first fuel supply such that a first fuel is supplied to a combustion chamber of an engine; allowing the controller to output a signal to a second fuel supply such that a second fuel is supplied to the combustion chamber after the first fuel is supplied, the second fuel less easily vaporizing than the first fuel, and having a pressure and temperature at which compression ignition is initiated and at least one of which is lower than that of the first fuel; after the second fuel is supplied to the combustion chamber, compressing and igniting an air-fuel mixture formed inside the combustion chamber, and allowing the controller to output a signal to the first fuel supply such that a weight of the first fuel supplied to the combustion chamber is larger than a weight of the second fuel supplied to the combustion chamber.

Thus, since the generation of the soot and CO can be reduced. This enhances the emission performance of the compression ignition engine. In addition, the air-fuel mixture can be compressed and ignited at the appropriate timing by supplying the second fuel. This can enhance the torque of the compression ignition engine and the fuel economy performance.

### ADVANTAGES OF THE INVENTION

As described above, according to the compression ignition engine and the method for controlling the compression ignition engine, the generation of the soot and CO can be reduced, thereby enhancing emission performance of the compression ignition engine.

### BRIEF DESCRIPTION OF THE DRAWINGS

[FIG. 1] FIG. 1 is a schematic view illustrating a configuration of an engine system.
[FIG. 2] FIG. 2 is a block diagram illustrating a configuration relating to control of the engine system.
[FIG. 3] FIG. 3 is a diagram illustrating fuel injection timing.
[FIG. 4] FIG. 4 is a diagram illustrating preferred operating regions of the engine system.
[FIG. 5] FIG. 5 is a diagram for explaining intake delayed closing control.
[FIG. 6] FIG. 6 is a flowchart illustrating a specific example of control of the engine system.
[FIG. 7] FIG. 7 is a table showing main specifications of the engine system.
[FIG. 8] FIG. 8 is a graph illustrating each relationship between an indicated mean effective pressure (IMEP) and an indicated specific fuel consumption (gross ISFC) in an example.
[FIG. 9] FIG. 9 is a graph illustrating each relationship between the indicated mean effective pressure (IMEP) and an amount of NOₓ emission in the example.
[FIG. 10] FIG. 10 is a graph illustrating each change in an in-cylinder pressure with respect to a crank angle in the example.

### DESCRIPTION OF EMBODIMENTS

Hereinafter, an embodiment of the present disclosure will be described with reference to the accompanying drawings. The following description of a preferred embodiment is merely illustrative in nature and is not intended to limit applications or uses of the present disclosure.

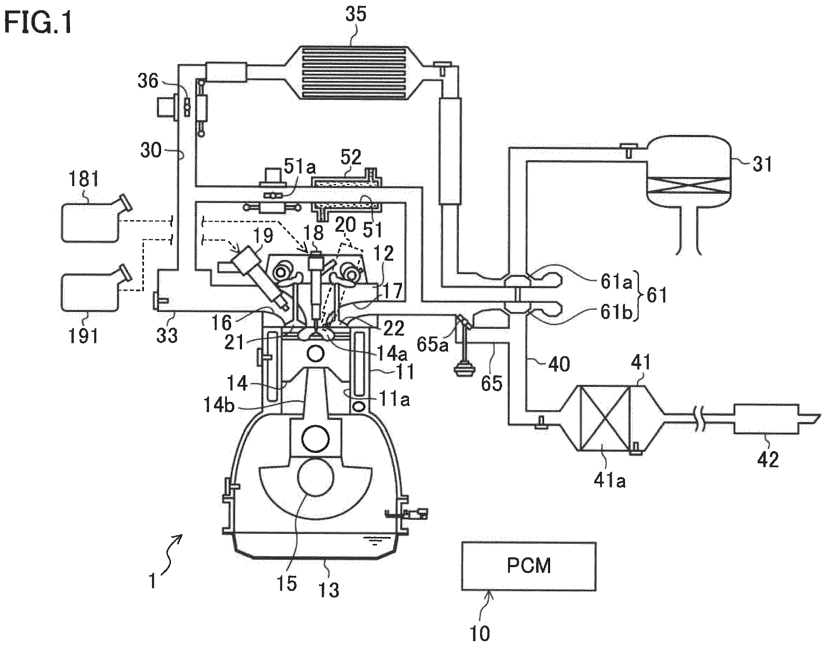

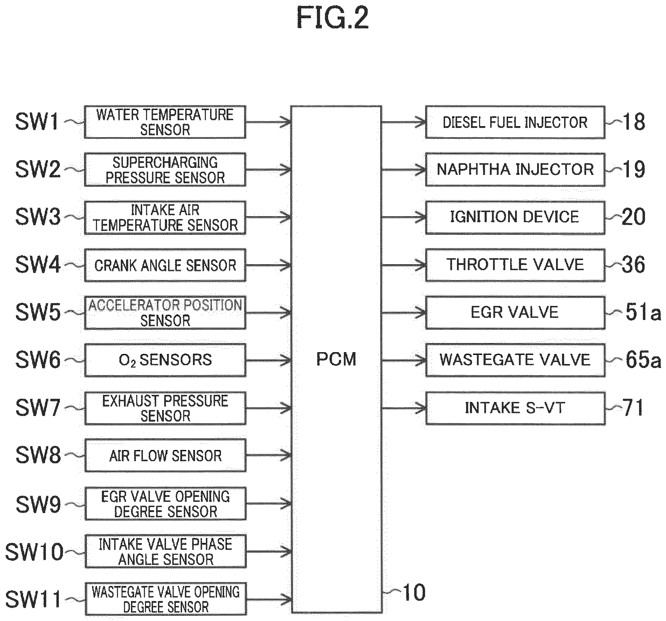

FIG. 1 illustrates a schematic configuration of an engine system. FIG. 2 illustrates a configuration related to control of the engine system. The engine system is mounted in a four-wheel vehicle. The engine system disclosed herein is suitable for, for example, large vehicles such as large trucks. However, the engine system disclosed herein can be widely applied to various four-wheel vehicles regardless of sizes of the vehicles.

The engine system includes a diesel engine 1 as a compression ignition engine. The operation of the diesel engine 1 allows a vehicle to travel.

The engine system is configured to supply, to the diesel engine 1, diesel fuel (that is, light oil or fuel mainly composed of light oil) and a different type of fuel having properties different from those of the diesel fuel. The different type of fuel has properties in which at least one of a pressure or temperature thereof, at which compression ignition is initiated, is higher than that of the diesel fuel and a boiling point thereof is lower than that of the diesel fuel. The different type of fuel more easily vaporizes and less easily ignites, as compared with the diesel fuel. The different type of fuel corresponds to a first fuel, and the diesel fuel corresponds to a second fuel. The different type of fuel is fuel mainly for generating torque. The diesel fuel is fuel mainly for ignition.

The different type of fuel is specifically naphtha. Examples of naphtha which can be used in the engine system include light naphtha, heavy naphtha, and full-range naphtha. Light naphtha, heavy naphtha, and full-range naphtha have different boiling point ranges. Alternatively, a blend of naphtha and a small amount of crude oil or heavy oil may be used as modified naphtha in the engine system.

The above-mentioned different type of fuel may be gasoline besides naphtha. Further, the different type of fuel is not limited to one type of fuel, and may be a blend of two or more types of fuel. For example, a blend of naphtha and gasoline, a blend of naphtha and other fuel, or a blend of gasoline and other fuel may be used as the different type of fuel.

Hereinafter, the engine system for supplying the diesel fuel and naphtha to the diesel engine 1 will be described.

### <Configuration of Engine System>

The diesel engine 1 includes a cylinder block 11 provided with a plurality of cylinders 11a (only one is shown in FIG. 1), a cylinder head 12 disposed on the cylinder block 11, and an oil pan 13 disposed under the cylinder block 11 and storing lubricating oil. A piston 14 is fitted into each of the cylinders 11a of the diesel engine 1 so as to reciprocate along a central axis of each cylinder 11a. The piston 14 is coupled to a crankshaft 15 via a connecting rod 14b. The top surface of the piston 14 has a cavity defining a re-entrant combustion chamber 14a. The diesel engine 1 has a geometric compression ratio of 13 or more and 18 or less.

The cylinder head 12 is provided with an intake port 16 and an exhaust port 17 for each of the cylinders 11a. Each intake port 16 is provided with an intake valve 21 for opening and closing an opening of the combustion chamber 14a. Each intake port 16 is provided with an exhaust valve 22 for opening and closing the opening of the combustion chamber 14a.

The diesel engine 1 is provided with an intake sequential valve timing (S-VT) 71 for making a valve timing variable as a valve mechanism for driving the intake valve 21 (see FIG. 2). The intake S-VT 71 may have various configuration such as a hydraulic configuration or an electromotive configuration. The diesel engine 1 changes the valve timing of the intake valve 21 in accordance with an operating state.

The cylinder head 12 is provided with a naphtha injector 19 as a first fuel supply and a diesel fuel injector 18 as a second fuel supply.

The naphtha injector 19 is configured to inject naphtha into the intake port 16. Specifically, the naphtha injector 19 is disposed in such a way that an injection hole thereof injecting the naphtha faces the inside of the intake port 16 of each of the cylinders 11a. Naphtha stored in a first fuel tank 191 is supplied to the naphtha injector 19 through a naphtha supply path (not shown).

The diesel fuel injector 18 is configured to directly inject the diesel fuel into the combustion chamber 14a. Specifically, the diesel fuel injector 18 is disposed in such a way that an injection hole thereof injecting the diesel fuel faces the inside of each of the cylinders 11a from a bottom surface of the cylinder head 12. Although the diesel fuel injector 18 is disposed on a central axis of each of the cylinders 11a in the illustrated example, the diesel fuel injector 18 may be disposed at an appropriate position. The diesel fuel stored in a second fuel tank 181 is supplied to the diesel fuel injector 18 through a diesel fuel supply path (not shown).

An ignition assist device is also attached to the cylinder head 12. The ignition assist device assists ignition of the air-fuel mixture when the diesel engine 1 is in a specific operating state. Specifically, the ignition assist device is an ignition device 20 for igniting the air-fuel mixture by spark ignition. Although detailed illustration is omitted, the ignition device 20 is disposed in such a way that an electrode thereof faces the inside of the combustion chamber 14a. The ignition assist device may be a glow plug which enhances ignitability of the fuel by heating air inside each of the cylinders 11 a, instead of the ignition device.

An intake passage 30 is connected to one side surface of the diesel engine 1. The intake passage 30 communicates with the intake port 16 of each of the cylinders 11a. The intake passage 30 introduces air and an EGR gas into each of the cylinders 11a. An exhaust passage 40 is connected to another side surface of the diesel engine 1. The exhaust passage 40 communicates with the exhaust port 17 of each of the cylinders 11a. The exhaust passage 40 discharges burnt gas from each of the cylinders 11a. As will be described later in detail, the intake passage 30 and the exhaust passage 40 are provided with a turbosupercharger 61 for supercharging air.

An air cleaner 31 which filters air is provided at an upstream end portion of the intake passage 30. A surge tank 33 is provided in the vicinity of a downstream end of the intake passage 30. The portion of the intake passage 30 located downstream of the surge tank 33 constitutes independent passages which respectively branch off for the cylinders 11a. A downstream end of each of the independent passages is connected to the intake port 16 of each of the cylinders 11a.

Between the air cleaner 31 and the surge tank 33 in the intake passage 30, a compressor 61a of the turbosupercharger 61, an intercooler 35 for cooling air compressed by the compressor 61a, and a throttle valve 36 for adjusting an amount of air are disposed. The intercooler 35 may be an air-cooling or water-cooling type intercooler. Although the throttle valve 36 is basically in a fully open state, for example, when a large amount of the EGR gas is recirculated into the intake passage 30, the throttle valve 36 is throttled to generate a negative pressure in the intake passage 30.

An upstream side portion of the exhaust passage 40 is an exhaust manifold. The exhaust manifold has a plurality of independent passages, each of which is branched to each of the cylinders 11a and is connected to an outer end of the exhaust port 17, and a collecting part where the plurality of independent passages are assembled.

In the portion of the exhaust passage 40 downstream of the exhaust manifold, a turbine 61b of the turbosupercharger 61, an exhaust gas purifier 41 which purifies harmful components in an exhaust gas, and a silencer 42 are disposed sequentially from an upstream side.

The exhaust gas purifier 41 has a three-way catalyst 41a. The three-way catalyst 41a purifies hydrocarbons (HC), carbon monoxide (CO), and nitrogen oxides (NOₓ) in the exhaust gas at the same time. The three-way catalyst 41a oxidizes hydrocarbons to water and carbon dioxide, oxidizes carbon monoxide to carbon dioxide, and reduces nitrogen oxides to nitrogen. When an air-fuel ratio (weight ratio of air and fuel) of the exhaust gas is a stoichiometric air-fuel ratio, the three-way catalyst 41a can sufficiently purify the exhaust gas. Even when the air-fuel ratio falls within a purification window of a substantially stoichiometric air-fuel ratio of 14.5 to 15.0, the three-way catalyst 41a can purify the exhaust gas.

In addition to the three-way catalyst 41a, the exhaust gas purifier 41 may have a particulate filter for collecting particulates such as soot contained in the exhaust gas.

An exhaust gas recirculation passage 51 is interposed between the intake passage 30 and the exhaust passage 40. Through the exhaust gas recirculation passage 51, a part of the exhaust gas to the intake passage 30 is recirculated. An upstream end of the exhaust gas recirculation passage 51 is connected to in the exhaust passage 40 at a position between the exhaust manifold and the turbine 61b (that is, a portion upstream of the turbine 61b). A downstream end of the exhaust gas recirculation passage 51 is connected to the intake passage 30 at a position between the surge tank 33 and the throttle valve 36 (that is, a portion downstream of the compressor 61a). An EGR valve 51a for adjusting an amount of the exhaust gas recirculated to the intake passage 30 and an EGR cooler 52 for cooling the exhaust gas by an engine coolant are disposed in the exhaust gas recirculation passage 51.

The turbosupercharger 61 has the compressor 61a disposed in the intake passage 30 and the turbine 61b disposed in the exhaust passage 40. The compressor 61a and the turbine 61b are connected to each other, and the compressor 61a and the turbine 61b rotate integrally with each other. The compressor 61a is disposed in the intake passage 30 at a position between the air cleaner 31 and the intercooler 35. The turbine 61b is disposed in the exhaust passage 40 at a position between the exhaust manifold and the exhaust gas purifier 41. The turbine 61b is rotated by an exhaust gas flow, thereby rotating the compressor 61a to compress the air.

An exhaust bypass passage 65 for bypassing the turbine 61b is connected to the exhaust passage 40. The exhaust bypass passage 65 is provided with a wastegate valve 65a for adjusting an amount of the exhaust gas which flows through the exhaust bypass passage 65. The wastegate valve 65a is configured to be in a fully open state (normal open state) when not energized.

### <Configuration of Control Unit of Engine>

As shown in FIG. 1 and FIG. 2, the diesel engine 1 is controlled by a power train control module (hereinafter, referred to as a "PCM") 10. The PCM 10 is comprised of a microprocessor having a CPU, a memory, a counter/timer group, an interface, and a path connecting these units together. The PCM 10 constitutes a control unit (and a controller). As shown in FIG. 2, the PCM 10 receives detection signals from various sensors. The sensors included here are: a water temperature sensor SW1 for detecting a temperature of the engine coolant; a supercharging pressure sensor SW2, for detecting a pressure of air supplied to the combustion chamber 14a, which is attached to the surge tank 33; an intake air temperature sensor SW3 for detecting a temperature of air; a crank angle sensor SW4 for detecting a rotation angle of the crankshaft 15; an accelerator position sensor SW5 for detecting an accelerator position in accordance with an amount of operation of an accelerator pedal (not shown) of the vehicle; O₂ sensors SW6, each for detecting a concentration of oxygen in the exhaust gas, which are attached in the exhaust passage upstream and downstream of the three-way catalyst 41a, respectively; an exhaust pressure sensor SW7 for detecting an exhaust pressure in a portion, of the exhaust passage 40, upstream of the turbine 61b; an air flow sensor SW8 for detecting an intake air flow rate taken into the intake passage 30; an EGR valve opening degree sensor SW9 for detecting an opening degree of the EGR valve 51a; an intake valve phase angle sensor SW10 for detecting a phase angle of the intake valve 21; and a wastegate valve opening degree sensor SW11 for detecting an opening degree of the wastegate valve 65a.

The PCM 10 performs various calculations based on the detection signals of these sensors SW1 to SW11, thereby determining states of the diesel engine 1 and the vehicle, and outputs control signals to actuators of the diesel fuel injector 18, the naphtha injector 19, the ignition device 20, the intake S-VT 71, the throttle valve 36, the EGR valve 51a, and the wastegate valve 65a.

### (Control of Engine)

The basic control of the diesel engine 1 by the PCM 10 is mainly to determine a target torque based on an accelerator position and to allow the diesel fuel injector 18 and the naphtha injector 19 to inject the fuel corresponding to the target torque.

The PCM 10 also adjusts an amount of the air to be introduced into the cylinder 11 a in accordance with an operating state of the diesel engine 1. Specifically, the PCM 10 adjusts the amount of the air by controlling opening degrees of the throttle valve 36 and the EGR valve 51a (that is, controlling the EGR) and/or by controlling valve timing of the intake valve 21 by the intake S-VT 71 (that is, performing intake delayed closing control). By performing the delayed closing control in which the intake valve 21 is closed (a point in time when a lift height of the intake valve 21 is 0.4 mm is defined as valve closing timing) within a range of 60° to 120° after an intake bottom dead center in a middle stage of a compression stroke ("the middle stage" refers therein to the middle stage when 180° of a crank angle in the combustion stroke is divided into three stages, namely, an initial stage, the middle stage, and a last stage), an amount of the air introduced into the cylinder 11a can be adjusted without increasing a pump loss. In addition, by recirculating the EGR gas, an amount of the air to be introduced into the cylinder 11a can be adjusted, and in addition thereto, since a temperature inside the cylinder 11a is increased (since a rise in the temperature inside the cylinder 11a is insufficient in the vicinity of a compression top dead center due to a decrease in an effective compression ratio, caused by the intake delayed closing control, this insufficiency is compensated), ignitability of the air-fuel mixture can be enhanced. Further, by recirculating the EGR gas in a high load region in which the temperature inside the cylinder 11a becomes high, since an inert gas having a low temperature flowing through the EGR cooler 52 is recirculated to the combustion chamber 14a the air-fuel mixture (naphtha) can be substantially prevented from being ignited prematurely, and the air-fuel mixture can be ignited at proper ignition timing at which a high engine torque can be generated.

The PCM 10 further performs air-fuel ratio feedback control in which an air amount and a fuel amount are adjusted based on the concentration of the oxygen in the exhaust gas detected by the O₂ sensors SW 6 and the intake air flow rate detected by the air flow sensor SW 8. The PCM 10 sets an air-fuel ratio of the air-fuel mixture inside the combustion chamber 14a (that is, a weight ratio (A/F) between the air (A) and the fuel (F) in the combustion chamber 14a) to the stoichiometric air-fuel ratio and sets an air-fuel ratio of the exhaust gas discharged from the combustion chamber 14a to the stoichiometric air-fuel ratio.

Since the weight ratio A/F = 14.5 to 15.0 is an air-fuel ratio corresponding to the purification window of the three-way catalyst 41a, the air-fuel ratio in the combustion chamber 14a may be set to a substantially stoichiometric air-fuel ratio (14.5 to 15.0), and the air-fuel ratio of the exhaust gas discharged from the combustion chamber 14a may be set to a range of 14.5 to 15.0. The fuel quantity referred to herein is a total fuel amount which contains both of the diesel fuel and naphtha. The engine system performs air-fuel ratio feedback control over the entire operating range of the diesel engine 1. Thus, the engine system purifies the exhaust gas using the three-way catalyst 41a over the entire operating range of the diesel engine 1.

### (Fuel Injection Control)

Next, the fuel injection control executed by the PCM 10 will be described. As described above, the engine system mainly supplies, to the diesel engine 1, naphtha for generating torque and the diesel fuel for ignition. When a weight of supplied naphtha is compared to a weight of supplied diesel fuel, the weight of supplied naphtha is larger than the weight of supplied diesel fuel. The amount of supplied diesel fuel accounts for 10% or less of a total amount of fuel supplied to the combustion chamber 14a in terms of a ratio by weight. The amount of supplied diesel fuel may account for, for example, 5% of the total amount of fuel supplied thereto.

Since a boiling point of naphtha is lower than a boiling point of the diesel fuel, naphtha easily vaporizes inside the combustion chamber 14a. Therefore, an air-fuel mixture which is homogeneous and has an air-fuel ratio approximating the stoichiometric air-fuel ratio is formed inside the combustion chamber 14a by naphtha. Thus, generation of soot is reduced, and generation of CO is reduced.

On the other hand, at least one of a pressure or temperature of the naphtha at which the compression ignition is initiated is lower than that of the diesel fuel. That is, the naphtha is low in ignitability. As described above, the diesel engine 1 is configured to have a low geometric compression ratio of 13 or more and 18 or less, which is disadvantageous in ignition of the fuel.

Therefore, in this engine system, the diesel fuel having excellent ignitability is supplied into the combustion chamber 14a. Since the diesel fuel functions as the fuel for the ignition, the air-fuel mixture can be reliably compressed and ignited at predetermined timing. The air-fuel mixture including naphtha and the diesel fuel is combusted.

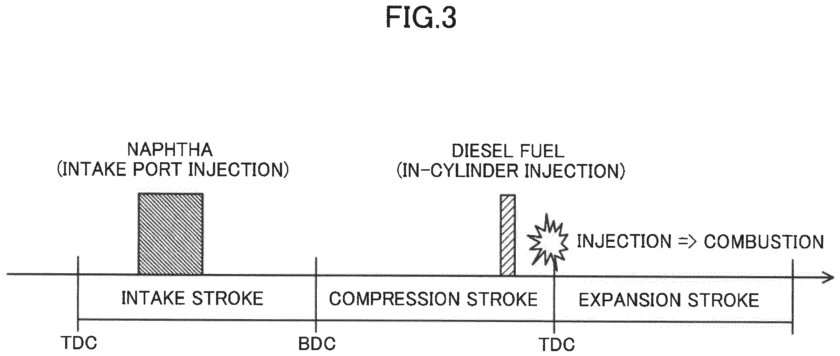

FIG. 3 illustrates timing at which naphtha is injected and timing at which the diesel fuel is injected at a predetermined engine speed. The naphtha injector 19 attached to the intake port 16 injects naphtha into the intake port 16 during an intake stroke period in which the intake valve 21 is open. The timing at which naphtha is injected may be set within a period from a middle stage to an initial stage of the intake stroke. Here, the initial and middle stages of the intake stroke refer therein to the initial and middle stages when the intake stroke is divided into three stages, namely, the initial stage, the middle stage, and a last stage. During the period of the middle stage to the initial stage of the intake stroke, an intake air flow in each of the cylinders 11a is increased. Naphtha is injected during this period, thereby allowing the intake air flow to diffuse naphtha throughout the combustion chamber 14a to homogenize the air-fuel mixture.

The diesel fuel injector 18 mounted in such a way as to face the inside of the combustion chamber 14a injects the diesel fuel into the combustion chamber 14a during the compression stroke period. The timing at which the diesel fuel is injected may be set in the vicinity of a compression top dead center, specifically, within a period of 30 to 10 crank angle (CA) degrees before the compression top dead center. In this way, the air-fuel mixture is compressed and ignited in the vicinity of the compression top dead center, and the combustion can be started. When a combustion gravity center of this combustion is set to 5 to 10 CA degrees after the compression top dead center, a thermal efficiency of the diesel engine 1 is enhanced. In addition, as described above, since the geometric compression ratio of the diesel engine 1 is low, the air-fuel mixture containing naphtha can be substantially prevented from being ignited prematurely before the diesel fuel is injected. By adjusting the timing at which the diesel fuel is injected, the timing at which the air-fuel mixture is compressed and ignited can be adjusted.

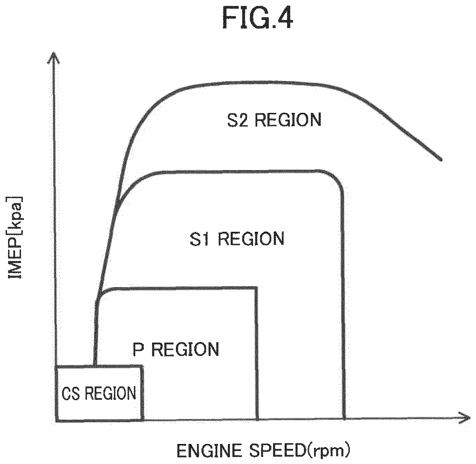

In this embodiment, in a medium load region (S1 region) and a high load region (S2 region) of an operating region of the engine 1 shown in FIG. 4, the diesel fuel is used as the fuel for the ignition. In a low load region (P region) and a region (CS region) in which the engine 1 is cold or is forcibly started, the fuel is set to contain 100% naphtha without diesel fuel, and is ignited by the ignition assist device.

When the engine load is low and when the engine is cold, since a temperature in the combustion chamber is low, it is difficult to obtain desired ignitability even when the diesel fuel is supplied. Further, the above-described intake air delayed closing control lowers an effective compression ratio of the engine, thereby deteriorating the ignitability of the fuel.

Therefore, in the low load region (P region) and the region (CS region) in which the engine 1 is cold or is forcibly started, the fuel is ignited by the ignition assist device without using the diesel fuel. The diesel fuel may be supplied and the ignition assist device may be activated.

### (EGR control)

As described above, in order to make the air-fuel ratio A/F in the combustion chamber 14a substantially equal to the stoichiometric air-fuel ratio and to enhance the ignitability of the fuel, when both of naphtha and the diesel fuel are supplied to the combustion chamber 14a, the PCM 10 controls the EGR valve 51a in the operation region at least on a low load side to recirculate a part of the exhaust gas from the exhaust passage 40 to the intake passage 30 (EGR).

In the operating region of the engine 1 shown in FIG. 4, the medium load region (S1 region) and the high load region (S2 region) are operating regions in which both naphtha and the diesel fuel are supplied to the combustion chamber 14a, and the EGR is executed at least in the medium load region (S1 region) which is the operating region on the low load side.

In this embodiment, the PCM 10 executes the EGR in the low load region (P region), the medium load region (S1 region), and the high load region (S2 region) of the engine 1 shown in FIG. 4. In the high load region of the operating region of the engine, an EGR rate (rate of an amount of recirculated exhaust gas to a total of the amount of the recirculated exhaust gas and an amount of intake air) is lowered, as compared with that in the low load region of the operating region thereof. Specifically, in the low load region (P region) and the medium load region (S1 region), the EGR valve 51a is controlled such that the EGR rate becomes 40%, and in the high load region (S2 region), the EGR valve 51a is controlled such that, as the load exerted on the engine increases, the EGR rate is lowered in a range of 30% to 0%.

### (Intake Delayed Closing Control)

In addition to the above-described EGR control, in order to make the air-fuel ratio A/F of the combustion chamber 14a substantially equal to the stoichiometric air-fuel ratio, the PCM 10 executes intake delayed closing control by the intake S-VT 71 in the engine low load region (P region).

Here, the throttle valve 36 is controlled in a closing direction in order to obtain an intake negative pressure basically for the EGR. That is, although it is possible to utilize throttle control as means for making the air-fuel ratio A/F substantially equal to the stoichiometric air-fuel ratio (means for reducing an amount of introduced fresh air), a pump loss is increased by the throttle control.

Therefore, in this embodiment, in the air-fuel ratio control, the delayed closing control of the intake valve 21 (control in which a period in which the valve is open in the compression stroke is extended) is performed.

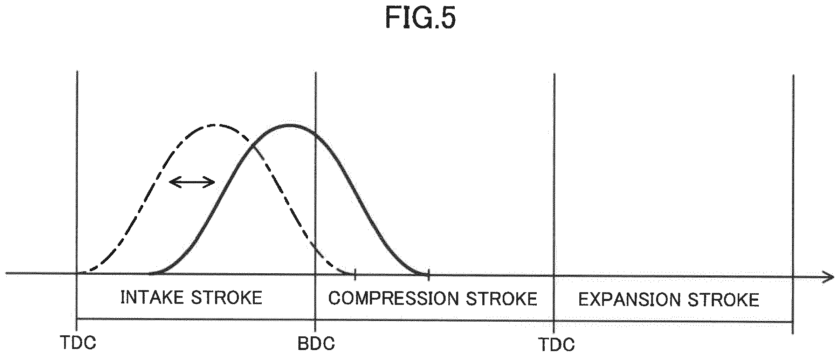

In FIG. 5, a virtual line indicates reference valve timing for the intake valve 21, and in this embodiment, timing at which the intake valve 21 is closed is at 30 CA degrees after an intake bottom dead center. The PCM 10 delays the timing at which the intake valve 21 is closed such that, as the load exerted on the engine decreases, an amount of intake air is decreased. A solid line in FIG. 5 indicates valve timing showing that closing of the intake valve 21 is delayed such that the closing timing is at 90 CA degrees after the intake bottom dead center. The closing timing of the intake valve 21 is defined as a point at which a lift amount of the intake valve 21 is reduced to 0.4 mm.

### <Specific Example of Engine Control>

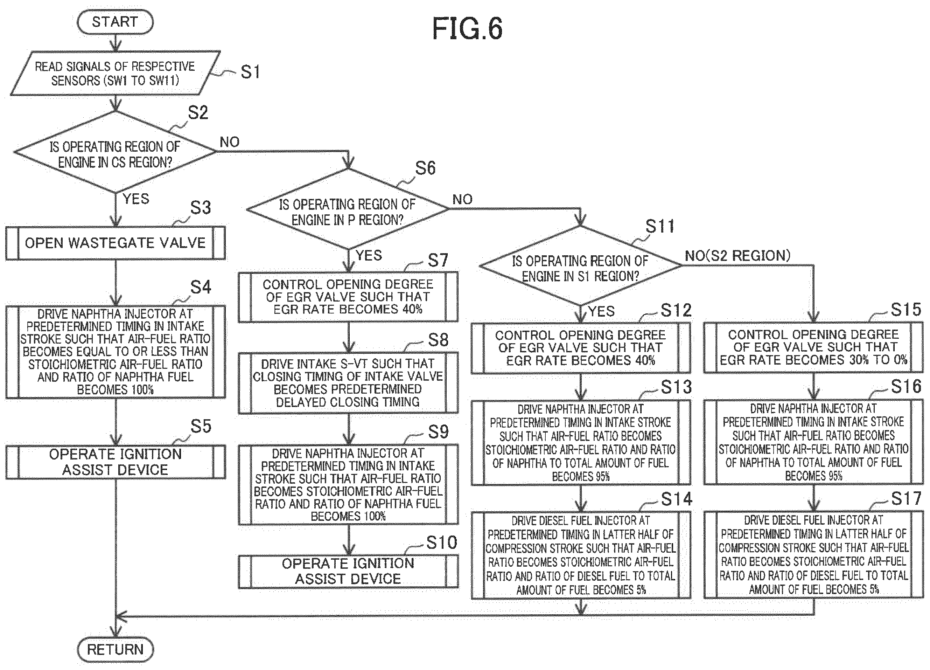

As shown in FIG. 6, detection signals of respective sensors SW1 to SW11 are read, and it is determined whether or not an operation state of the engine 1 is in a CS region (in which the engine 1 is cold or is forcibly started) (S1 and S2).

When the operating state of the engine 1 is in the CS region, the process proceeds to Step S3, and the wastegate valve 65a is opened. As a result, the exhaust gas bypasses the turbine 61b and is sent to the three-way catalyst 41a. Accordingly, deprivation of heat from the exhaust gas by the turbine 61b can be substantially avoided, thereby leading to advantage in an early temperature rise of the three-way catalyst 41a due to the heat of the exhaust gas. In subsequent Step S4, the naphtha injector 19 is driven at predetermined timing in the intake stroke such that a ratio of naphtha in the fuel supplied to the combustion chamber 14a becomes 100%, and the air-fuel ratio becomes equal to or less than the stoichiometric air-fuel ratio (rich in A/F which is 15 or less). In subsequent Step S5, the ignition device 20 is operated such that the fuel is ignited at a predetermined timing in the vicinity of the compression top dead center.

In Step S2, when the operating state of the engine 1 is not in the CS region, the process proceeds to Step S6, and it is determined whether or not the operating state of the engine 1 is in the P region (low load region).

When the operating state of the engine 1 is in the P region, the process proceeds to Step S7, and an opening degree of the EGR valve 51a is controlled such that the EGR rate becomes 40%. In subsequent Step S8, the intake S-VT 71 is driven such that closing timing of the intake valve 21 becomes predetermined delayed closing timing. In subsequent Step S9, the naphtha injector 19 is driven at predetermined timing in the intake stroke such that the ratio of naphtha in the fuel supplied to the combustion chamber 14a becomes 100%, and the air-fuel ratio becomes the stoichiometric air-fuel ratio (around A/F = 14.7). In subsequent Step S10, the ignition device 20 is activated such that the fuel is ignited at predetermined timing in the vicinity of the compression top dead center.

In Step S6, when the operating state of the engine 1 is not in the P region, the process proceeds to Step S11, and it is determined whether or not the operating state of the engine 1 is in the S1 region (medium load region).

When the operating state of the engine 1 is in the S1 region, the process proceeds to Step S12, and the opening degree of the EGR valve 51a is controlled such that the EGR rate becomes 40%. Further, the valve timing of the intake valve 21 is controlled to be the reference timing (as indicated by the virtual line in FIG. 5). In subsequent Step S13, the naphtha injector 19 is driven at predetermined timing in the intake stroke such that the ratio of naphtha to a total amount of the fuel supplied to the combustion chamber 14a becomes 95%, and the air-fuel ratio becomes the stoichiometric air-fuel ratio. In subsequent Step S14, the diesel fuel injector 18 is driven at predetermined timing in a latter half of the compression stroke such that a ratio of the diesel fuel to the total amount of the fuel supplied to the combustion chamber 14a becomes 5%, and the air-fuel ratio becomes the stoichiometric air-fuel ratio.

In Step S11, when the operating state of the engine 1 is not in the S1 region, the operating state of the engine 1 is in the S2 region (high load region). At this time, the process proceeds to Step S15, and the opening degree of the EGR valve 51a is controlled such that the EGR rate becomes 30% or less. Further, the valve timing of the intake valve 21 is controlled to be the reference timing (as indicated by the virtual line in FIG. 5). In subsequent Step S13, the naphtha injector 19 is driven at predetermined timing in the intake stroke such that the ratio of naphtha to a total amount of the fuel supplied to the combustion chamber 14a becomes 95%, and the air-fuel ratio becomes the stoichiometric air-fuel ratio. In subsequent Step S14, the diesel fuel injector 18 is driven at predetermined timing in a latter half of the compression stroke such that a ratio of the diesel fuel to the total amount of the fuel supplied to the combustion chamber 14a becomes 5%, and the air-fuel ratio becomes the stoichiometric air-fuel ratio.

### <Example of Control>

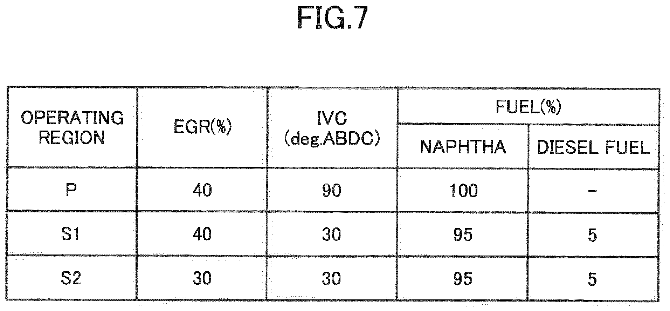

FIG. 7 shows an example of main specifications for combustion control in a low load region (P region), an medium load region (S1 region), and a high load region (S2 region) at an engine speed of 1500 rpm in an engine 1 having a geometric compression ratio of 16. The numerical values shown here are merely illustrative and can be changed in accordance with specifications. Each numerical value indicates a reference value and may include some variation in practice.

In the low load region, the EGR rate is set to 40%, and a relatively large amount of EGR gas is introduced into the combustion chamber. In the closing timing of the intake valve (IVC), the intake delayed closing control is performed, and the closing timing of the intake valve (IVC) is set to 90 CA degrees after the intake bottom dead center. Since with a reduction in the effective compression ratio due to the intake delayed closing control also involved, stable compression ignition is made difficult, forcible ignition by the ignition assist device is carried out, and as the fuel, only naphtha is used because naphtha allows a homogeneous air-fuel mixture to be formed and is advantageous in reduction of emissions, in addition to inexpensiveness thereof.

In the medium load range, the EGR rate is set to 40% which is the same as that in the low load region, and a relatively large amount of the EGR gas is introduced into the combustion chamber. The closing timing (IVC) of the intake valve is reset to the reference setting and is set to 30 CA degrees after the intake bottom dead center. Since stable compression ignition is possible, the ignition assist device is not used, and combustion is carried out by the compression ignition. The stable compression ignition is performed by adding 5% diesel fuel to naphtha which is main fuel. Since inert gas (the EGR gas) cooled by the EGR cooler 52 and having a relatively low temperature is introduced into the combustion chamber, a steep rise of the combustion after the ignition of the air-fuel mixture is reduced, and an increase in combustion noise and an increase in a thermal load are reduced.

In the high-load region, the EGR rate is set to 30%, and an amount of air is relatively increased in order to realize efficient combustion. The closing timing (IVC) of the intake valve is set to 30 CA degrees after the intake bottom dead center as in the medium load region, and since stable compression ignition is possible, the combustion is carried out by the compression ignition. As in the medium load region, 5% diesel fuel and 95% naphtha are used as the fuel. Since the inert gas (EGR gas) cooled by the EGR cooler 52 and having the relatively low temperature is introduced into the combustion chamber, premature ignition of the air-fuel mixture (naphtha) is substantially prevented, and the ignition timing at which high engine torque can be generated can be obtained.

Further, even in an engine high speed region, the EGR rate is set to 30%, and an amount of air is relatively increased in order to realize efficient combustion. The closing timing (IVC) of the intake valve is set to timing at which an intake filling amount can be increased in the high speed region and is set to approximately 45 CA degrees after the intake bottom dead center. In the high speed region, an elapsed time of the crank angle from the intake stroke to the compression stroke becomes short, as compared with that in a low speed region. Thus, a period in which naphtha is supplied via the intake port 16 becomes long when viewed by the crank angle. Further, a time interval from the time when supplying naphtha is finished to the time in the vicinity of the compression top dead center becomes remarkably short, thereby reducing the formation of the homogeneous mixture of naphtha. However, deterioration in homogenization is reduced by acceleration of vaporization of naphtha, prompted by the recirculation of the EGR gas, thereby eliminating or reducing the generation of soot to enhance the engine torque. Although 5% diesel fuel and 95% naphtha are used also in the high speed region, if optimum ignition timing cannot be obtained because of balance between an engine speed and the time interval from the supply of naphtha to the time in the vicinity of the compression top dead center, 100% naphtha may be supplied and forcible ignition may be performed by the ignition assist device.

As described above, when the EGR gas is recirculated in the high speed region, since the soot is increased in the case in which the main fuel is the diesel fuel, the recirculation of the EGR gas is impossible. However, when naphtha is supplied as the main fuel, the recirculation of the EGR gas is effective.

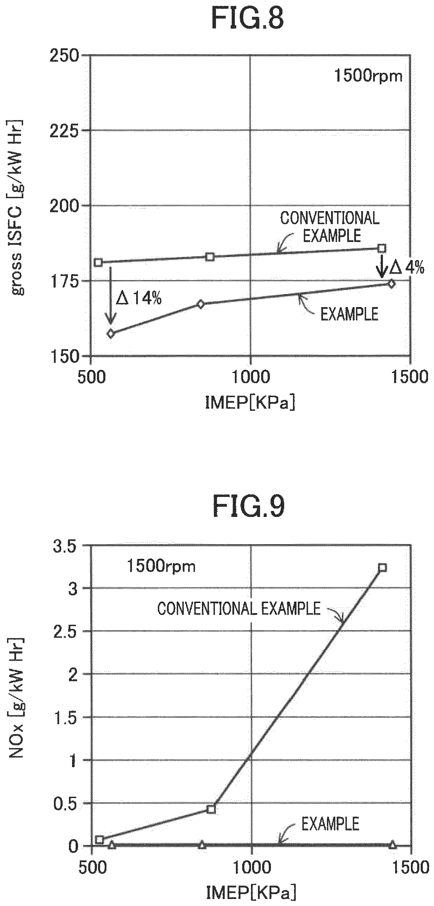

FIG. 8 shows each relationship between the indicated mean effective pressure (IMEP) and the indicated specific fuel consumption (gross ISFC) based on the main specifications in the example shown in FIG. 7 and in the conventional example (100% diesel fuel). In the example, since the air-fuel ratio is set to substantially the stoichiometric air-fuel ratio, the indicated specific fuel consumption in each of the low load, the medium load, and the high load is lower than that in the conventional example in which lean operation is performed. That is, the engine system disclosed herein enhances the engine torque and fuel economy performance, as compared with the conventional diesel engine system.

FIG. 9 illustrates each relationship between the indicated mean effective pressure (IMEP) and an amount of NOₓ emission in the above example and the conventional example. In the conventional example, when the engine load is increased, the amount of NOₓ discharged from the combustion chamber is increased. In contrast, in the example, the amount of NOₓ emission in a tail pipe disposed downstream of the three-way catalyst 41a is shown, and since the air-fuel ratio of the exhaust gas discharged from the combustion chamber 14a is set to the stoichiometric air-fuel ratio and NOₓ is purified by the three-way catalyst 41a, each amount of NOₓ is substantially zero. That is, in the engine system disclosed herein, emission performance is enhanced, as compared with the conventional diesel engine system.

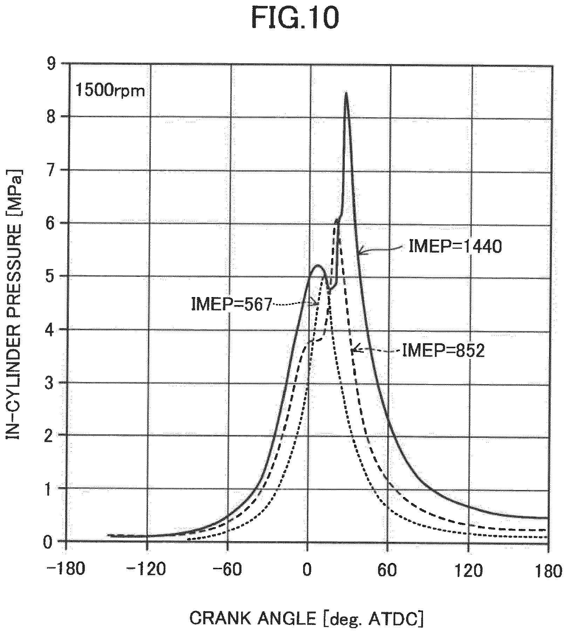

FIG. 10 shows each change in the in-cylinder pressure in the above example with respect to the crank angle. In FIG. 10, in each of a case of IMEP = 852 (in the medium load region) and a case of IMEP = 1440 (in the high load region) in which the diesel fuel is used as the fuel for ignition, the in-cylinder pressure peaks at a crank angle not exceeding 20 CA degrees after the compression top dead center. It can be seen that the fuel (naphtha and diesel fuel) combusts at timing at which a thermal efficiency is increased by the ignition caused by the diesel fuel.

As described above, in the engine system, naphtha for generating the torque and the diesel fuel for the ignition are supplied to the diesel engine 1. The air-fuel mixture whose air-fuel ratio is approximate to the stoichiometric air-fuel ratio is formed throughout the combustion chamber 14a by naphtha which is excellent in vaporization performance, thereby allowing the generation of the soot and CO to be reduced. In addition, with respect to the air-fuel mixture in the combustion chamber 14a, the weight ratio (A/F) between the fuel containing both naphtha and the diesel fuel and air is set to substantially the stoichiometric air-fuel ratio, and the air-fuel ratio of the exhaust gas discharged from the combustion chamber 14a is set to the stoichiometric air-fuel ratio, thereby allowing the exhaust gas to be purified using the three-way catalyst 41a provided in the exhaust passage 40. A post-processing system for purifying NOₓ, which is required in the conventional diesel engine, can be omitted, thereby simplifying the engine system and reducing costs. In addition, in the above-described engine system, since the air-fuel ratio of the air-fuel mixture is set to substantially the stoichiometric air-fuel ratio, the engine torque can be enhanced, as compared with the conventional diesel engine in which the lean operation is performed.

The present disclosure disclosed herein is not limited to the above-described configuration. For example, in the low load region or the light load region in which a total amount of the fuel injection is small, the air-fuel ratio of the air-fuel mixture may be significantly more fuel-lean than the stoichiometric air-fuel ratio (for example, A/F = 30 to 45). By setting the air-fuel ratio to approximately 30 to 45, the generation of NOₓ inside the combustion chamber 14a can be reduced. In addition, naphtha (first fuel) may also be injected directly into the combustion chamber.

Although in the above-described configuration, the turbosupercharger 61 is mounted, the configuration does not have to necessarily include no turbosupercharger. Specifically, the conventional diesel engine needs to mount the supercharger in order to make the air-fuel ratio upon the combustion lean, thereby reducing the soot and CO, and further needs to use the high-cost selective reduction catalyst in order to reduce NOₓ Alternatively, the conventional diesel engine needs to mount a plurality of the superchargers in order to significantly increase a supercharging pressure, thereby making the air-fuel ratio upon the combustion significantly lean, and further needs to decrease a compression ratio of an engine body and to decrease a combustion temperature, thereby reducing the soot, CO, and NOₓ. In the present disclosure, by supplying the first fuel, the air-fuel ratio of the air-fuel mixture can be set in the range of 14.5 to 15.0, and the combination with the three-way catalyst 41a allows reduction in the soot and CO and sufficient purification of NOₓ, without relying on the supercharging. The present disclosure can provide an inexpensive engine with no supercharger.

### DESCRIPTION OF REFERENCE CHARACTERS

- 1: Diesel Engine (Engine Body)
- 10: PCM (Controller)
- 14a: Combustion Chamber
- 16: Intake Port
- 18: Diesel Fuel Injector (Second fuel Supply)
- 19: Naphtha Injector (First fuel Supply)
- 40: Exhaust Passage
- 41a: Three-Way Catalyst

## Claims

1. A compression ignition engine comprising:
an engine body having a combustion chamber;
a first fuel supply configured to supply a first fuel to the combustion chamber;
a second fuel supply configured to supply a second fuel to the combustion chamber, the second fuel less easily vaporizing than the first fuel, and having a pressure and temperature at which compression ignition is initiated and at least one of which is lower than that of the first fuel; and
a controller configured to output a signal to each of the first fuel supply and the second fuel supply, wherein
the controller outputs a signal to the first fuel supply such that a weight of the first fuel supplied to the combustion chamber is larger than a weight of the second fuel supplied to the combustion chamber, and thereafter, outputs a signal to the second fuel supply such that the second fuel is supplied to the combustion chamber, and
the controller outputs the signal to each of the first fuel supply and the second fuel supply, thereby allowing formation of an air-fuel mixture inside the combustion chamber and compressing and igniting the air-fuel mixture.

2. The compression ignition engine of claim 1, wherein
the first fuel has a boiling point lower than that of the second fuel.

3. The compression ignition engine of claim 1 or 2, wherein
the controller outputs the signal to each of the first fuel supply and the second fuel supply such that the weight of the second fuel supplied to the combustion chamber accounts for 10% or less of a total weight of whole fuel supplied to the combustion chamber.

4. The compression ignition engine of any one of claims 1 to 3, wherein
the first fuel includes naphtha, and the second fuel includes diesel fuel.

5. The compression ignition engine of any one of claims 1 to 4, wherein
the first fuel includes gasoline, and the second fuel includes diesel fuel.

6. The compression ignition engine of any one of claims 1 to 5, wherein
the controller outputs the signal to each of the first fuel supply and the second fuel supply such that the first fuel and the second fuel are supplied to, and combusted in, the combustion chamber to make an air-fuel ratio of exhaust gas discharged from the combustion chamber fall within a range of 14.5 to 15.0.

7. The compression ignition engine of claim 6, wherein
the controller outputs the signal to each of the first fuel supply and the second fuel supply such that the first fuel and the second fuel are supplied to the combustion chamber to make an air-fuel ratio of an air-fuel mixture inside the combustion chamber fall within a range of 14.5 to 15.0.

8. The compression ignition engine of any one of claims 1 to 5, wherein
a three-way catalyst is disposed in an exhaust passage of the engine body to purify exhaust gas discharged from the combustion chamber, and
the controller outputs the signal to each of the first fuel supply and the second fuel supply such that the first fuel and the second fuel are supplied to, and combusted in, the combustion chamber to make an air-fuel ratio of the exhaust gas at a position upstream of the three-way catalyst in the exhaust passage equal to a stoichiometric air-fuel ratio.

9. The compression ignition engine of any one of claims 1 to 8, wherein
the first fuel supply is disposed in a position where the first fuel is injected into an intake port of the engine body, and
the second fuel supply is disposed in a position where the second fuel is injected into the combustion chamber.

10. The compression ignition engine of any one of claims 1 to 9, wherein
the controller outputs the signal to the first fuel supply such that the first fuel is supplied to the combustion chamber during an intake stroke, and
the controller outputs the signal to the second fuel supply such that the second fuel is supplied to the combustion chamber during a compression stroke after the intake stroke.

11. The compression ignition engine of claim 9, wherein
the controller outputs the signal to the first fuel supply such that the first fuel is injected into the intake port during the intake stroke, and
the controller outputs the signal to the second fuel supply such that the second fuel is injected into the combustion chamber during the compression stroke after the intake stroke.

12. A method for controlling a compression ignition engine, the method comprising:
allowing a controller to output a signal to a first fuel supply such that a first fuel is supplied to a combustion chamber of an engine;
allowing the controller to output a signal to a second fuel supply such that a second fuel is supplied to the combustion chamber after the first fuel is supplied, the second fuel less easily vaporizing than the first fuel, and having a pressure and temperature at which compression ignition is initiated and at least one of which is lower than that of the first fuel;
after the second fuel is supplied to the combustion chamber, compressing and igniting an air-fuel mixture formed inside the combustion chamber, and
allowing the controller to output a signal to the first fuel supply such that a weight of the first fuel supplied to the combustion chamber is larger than a weight of the second fuel supplied to the combustion chamber.
